# EUROPEAN PATENT SPECIFICATION

(11) **EP 3 240 249 B1**
(45) Date of publication and mention of the grant of the patent: **20.03.2019**
(21) Application number: 15879632.6
(22) Date of filing: 07.08.2015
(51) Int. Cl.: H04W 4/24, H04W 28/02, H04L 12/14, H04M 15/00

(54) **CONGESTION INFORMATION MANAGEMENT METHOD AND APPARATUS**
ÜBERLASTUNGSINFORMATIONENVERWALTUNGSVERFAHREN UND -VORRICHTUNG
PROCÉDÉ ET APPAREIL DE GESTION D'INFORMATIONS D'ENCOMBREMENT

(30) Priority: 26.01.2015 CN 201510039437
(43) Date of publication of application: 01.11.2017
(73) Proprietor: ZTE Corporation, Shenzhen, Guangdong 518057 (CN)
(72) Inventor: ZHOU, Xiaoyun, Shenzhen Guangdong 518057 (CN)
(74) Representative: AWA Sweden AB
(86) International application number: PCT/CN2015/086403
(87) International publication number: WO 2016/119433

(56) References cited:
- EP-A1- 2 819 455
- 'Technical Specification Group Core Network and Terminals; Policy and Charging Control over Np reference point (Release 13' 3GPP TS 29. 217 V1.0.0 30 November 2014, pages 1 - 20, XP050926948
- ZTE.: 'Resolve the race conditions related to UE mobility between RCAFs' 3GPP TSG CT3 MEETING #80 06 February 2015, XP050947430
- ERICSSON ET AL.: 'MOBILITY HANDLING ON THE NP INTERFACE' SA WG2 MEETING #104 11 July 2014, XP050836802
- ZTE: 'Np mobility scenario analysis and proposal' SA WG2 MEETING #105 17 October 2014, pages 2 - 143368, XP050891255

## Description

### Technical Field

The present invention relates to the field of communications, and more particularly, to a method and an apparatus for managing congestion information.

### Background

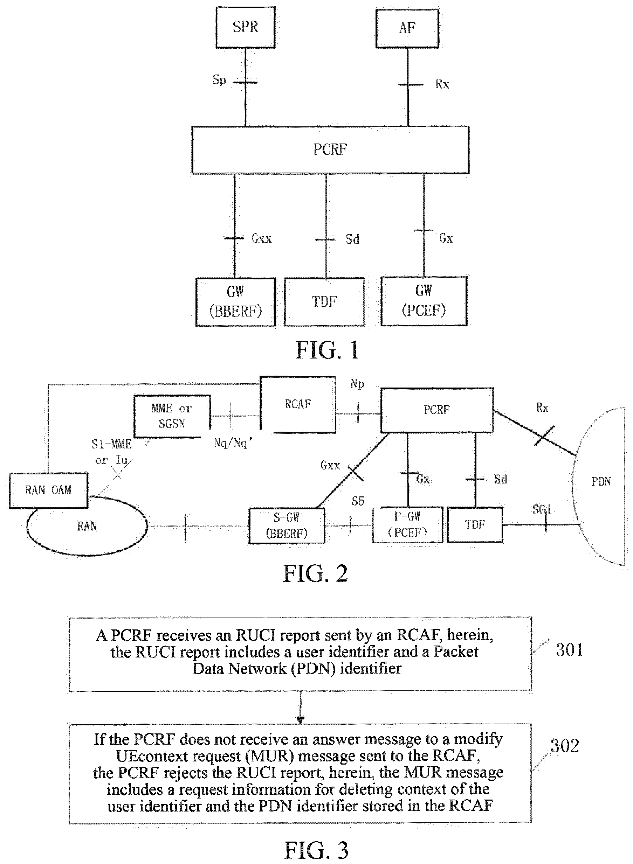

FIG. 1 is a schematic diagram of a Policy and Charging Control (PCC for short) architecture defined by the 3rd Generation Partnership Project (3GPP for short) in the existing technology, as shown in FIG. 1, a Policy and Charging Rules Function (PCRF for short) is the core of the entire PCC architecture. When the PCRF creates the control policy, it needs to combine with service information received from an Application Function (AF for short), user subscription information received from a Subscription Profile Repository (SPR for short), and policy configured by the operator. The PCRF issues control policy created for a service to a Policy and Charging Enforcement Function (PCEF for short) or a Bearer Binding and Event Reporting Function (BBERF for short) to perform. At the same time, the PCRF may subscribe related events of a bearer layer to the PCEF and/or BBERF so that the events may be perceived in time and the control policy is changed, when the events occur in the bearer layer. The PCEF may also support an application detection and control function. The PCEF may perform application detection and policy enforcement (such as gating, redirection, and bandwidth limitation) according to local configuration or a PCC policy which contains an application identifier and which is issued by the PCRF. The PCEF is generally located on a gateway of a network, such as a Packet Data Network Gateway (PDN-GW) of the EPS. In addition, the network may also implement application detection control by deploying standalone Traffic Detection Function (TDF for short). The TDF and the PCRF are connected via an Sd interface, and the TDF may perform application detection and policy execution according to an Application Detection and Control (ADC for short) rule which is pre-configured, or issued by the PCRF.

FIG. 2 is a schematic diagram of the architecture for a PCRF being aware of radio access network (RAN) load information in the existing technology. An RAN Congestion Awareness Function (RCAF for short) reports RAN User Plane Congestion Information (RUCI for short) to the PCRF via an Np interface, which is used by the PCRF for performing policy decision to reduce the network load. The RCAF collects user plane congestion information from an RAN Operation Administration Maintenance (OAM for short) system. For an Evolved UMTS Terrestrial Radio Access Network (E-UTRAN for short), the RCAF obtains a UE (IMSI) list for each activated APN under an Evolved Node B (eNB for short)/Evolved Cell Global Identifier (ECGI for short), from a Mobile Management Entity (MME for short) via an Nq interface. For UTRAN access, the RCAF may obtain an IMSI list under a specific NodeB (NB for short)/Cell Global Identifier (CGI for short) directly from the RAN, and obtains an IMSI list for each activated APN via a Nq'. Thus, the RCAF may obtain the IMSI list for each activated APN under each congestion base station (eNB/NB)/cell (ECGI/CGI). The RCAF reports the information to a correct PCRF, and the PCRF may adjust policies for these UE to reduce the load of the congestion base station or cell.

Typically, there is one or more RCAFs in a network, and each RCAF is responsible for managing a network area (for example, each RCAF corresponds to a cell list or a base station list). Thus, when a UE moves, it will move from a management range of one RCAF to a management range of another RCAF. Ideally, messages received by the PCRF and messages sent from the PCRF are in the order of the steps. However, in an actual environment, messages sent from RCAF1, RCAF2, and the PCRF and messages received by the RCAF1, RCAF2, and the PCRF may be out of order due to the delay, and thereby the message race condition occurs.

In case of the message race condition, UE1 is initially in a congestion area managed by the RCAF1 and the context stored by the PCRF also indicates that UE1 is in the congestion area managed by the RCAF1, and then UE1 moves, and the UE1 moves to a congestion area managed by the RCAF2. In practical applications, the following situations will occur.

The PCRF determines that the UE1 has been moved from the RCAF1 to the RCAF2, thus the PCRF sends a modify UE context request (MUR for short) message to the RCAF1 to request for deleting of context corresponding to a combination (user identifier 1, PDN identifier 1);
after the PCRF sends the MUR message, the PCRF receives an aggregated RUCI report request (ARR for short) message sent by the RCAF1. The RCAF1 also receives the MUR message before receiving an aggregated RUCI report answer (ARA for short) message, the contents of the two messages are conflicted, and the PCRF may determine that the UE1 moves to an area managed by the RCAF2 and then returns to the RCAF1, thus, the PCRF will update the context stored by the PCRF according to the RUCI reported by RCAF1. While the RCAF1 determines to delete context of the combination (user identifier 1, PDN identifier 1) according to the MUR.

EP2819455A1 discloses a method for off-path notification of Radio Access Network RAN congestion information in an Evolved Packet System EPS network.

Release 13", 3GPP TS 29. 217 V1.0.0, 30 November 2014 (2014-11-30), pages 1-20 discloses technical specification group core network and terminals, and policy and charging control over Np reference point.

### Summary

Embodiments of the present invention provide managing congestion information, which realize the synchronization of congestion information between an RCAF and the PCRF and reduce occurrence of misjudgment, when a UE moves from one RCAF to another RCAF.

The invention is carried out as described in the appended claims.

Embodiments of the present invention provide a method for managing congestion information, including: receiving, by a policy and charging rules Function, PCRF, an radio access network, RAN, user plane congestion information, RUCI, report sent by an RAN congestion awareness function, RCAF, herein, the RUCI report includes a user identifier and a packet data network, PDN, identifier; if the PCRF does not receive an answer message for a modify UE context request, MUR, message sent to the RCAF, rejecting, by the PCRF, the RUCI report, herein, the MUR message includes request information for deleting context of a user identifier and a PDN identifier stored in the RCAF.

In an exemplary embodiment, the method further includes: sending, by the PCRF, an answer message for the RUCI report to the RCAF, herein, the answer message carries indication information for rejecting the RUCI report and/or a reason for rejecting the RUCI report.

In an exemplary embodiment, the reason for rejecting the report is that deletion of the context or pending transaction is being performed.

Also provided is a method for managing congestion information, including: receiving, by an radio access network, RAN, congestion awareness function, RCAF, a modify UE context request, MUR, message which is sent by a policy and charging rules function, PCRF, herein, the MUR message includes request information for deleting context of a user identifier and a packet data network, PDN, identifier stored in the RCAF; and managing, by the RCAF, the context of the user identifier and the PDN identifier according to the MUR message.

In an exemplary embodiment, managing, the RCAF, the context of the user identifier and the PDN identifier according to the MUR message includes: deleting, the RCAF, the context of the user identifier and the PDN identifier according to the MUR.

In an exemplary embodiment, the method further includes: if the RCAF subsequently receives congestion information of the user identifier and the PDN identifier, sending, by the RCAF, a new RUCI report including the user identifier and the PDN identifier to the PCRF.

In an exemplary embodiment, managing, by the RCAF, the context of the user identifier and the PDN identifier according to the MUR message includes: if the RCAF does not receive an answer message for the RUCI report when receiving the MUR message, marking, by the RCAF, the context of the user identifier and the PDN identifier, stored in the RCAF as a pending state.

In an exemplary embodiment, managing, by the RCAF, the context of the user identifier and the PDN identifier according to the MUR message includes: after the RCAF receives an answer message for rejecting the RUCI report, marking, by the RCAF, the context of the user identifier and the PDN identifier stored in the RCAF, as a pending state.

In an exemplary embodiment, after marking, by the RCAF, the context of the user identifier and the PDN identifier stored in the RCAF, as the pending state, the method further includes: if the RCAF subsequently receives the congestion information of the user identifier and the PDN identifier, sending, by the RCAF, a new RUCI report including the user identifier and the PDN identifier to the PCRF; and if the RCAF does not receive the congestion information of the user identifier and the PDN identifier, deleting, by the RCAF, the context of the user identifier and the PDN identifier stored in the RCAF.

In an exemplary embodiment, after sending, the RCAF, the new RUCI report including the user identifier and the PDN identifier to the PCRF, the method further includes: deleting, by the RCAF, a mark of the pending state after receiving an answer message for the new RUCI report.

In the embodiments of the present invention, when an RCAF interacts with a PCRF, local information is managed by the determination of the sending state and receiving state of the message, which ensuring that correct congestion information is stored in the PCRF, the RCAF correctly processes context, and the occurrence of mistaken operation is reduced.

### Brief Description of the Drawings

FIG. 1 is a schematic diagram of a Policy and Charging Control architecture defined by the 3rd Generation Partnership Project in the existing technology.
FIG. 2 is a schematic diagram of the architecture for a PCRF being aware of RAN load information in the existing technology.
FIG. 3 is a flow chart of a method for managing congestion information provided in embodiment one of the present invention.
FIG. 4 is a flow chart of another method for managing congestion information provided in embodiment two of the present invention.
FIG. 5 is a schematic view of interaction of a method for managing congestion information provided in application example one of the present invention.
FIG. 6 is a schematic view of interaction of a method for managing congestion information provided in application example two of the present invention.
FIG. 7 is a schematic view of interaction of a method for managing congestion information provided in application example three of the present invention.
FIG. 8 is a schematic view of interaction of a method for managing congestion information provided in application example four of the present invention.
FIG. 9 is a structural diagram of an apparatus for managing congestion information provided in embodiment three of the present invention.
FIG. 10 is a structural diagram of another apparatus for managing congestion information provided in embodiment four of the present invention.
FIG. 11 is a structural diagram of a system for managing congestion information provided in embodiment five of the present invention.

### Detailed Description

Hereinafter, in conjunction with the accompanying drawings, embodiments of the present invention will be described in details. It should be illustrated that, under the situation of no conflict, the embodiments and the features in the embodiments in the present application can be freely combined.

### Embodiment One

FIG. 3 is a flow chart of a method for managing congestion information provided in an embodiment of the present invention. The method shown in FIG. 3 includes the following steps 301 and 302.

In step 301, a PCRF receives an RUCI report sent by an RCAF, herein, the RUCI report includes a user identifier and a Packet Data Network, PDN, identifier.

In step 302, if the PCRF does not receive an answer message for a Modify UEcontext Request, MUR, message sent to the RCAF, the PCRF rejects the RUCI report, herein, the MUR message includes request information for deleting context of the user identifier and the PDN identifier stored in the RCAF.

In the embodiment, when the PCRF interacts with the RCAF, after the RUCI report of a combination of the user identifier and the PDN identifier is received, if the PCRF determines that the MUR message which requests for deleting the context of the combination of the user identifier and the PDN identifier has been sent the answer message for the MUR message is not received, then the PCRF rejects the RUCI report to ensure that correct congestion information is stored locally, and the occurrence of a mistaken operation is reduced.

### Embodiment Two

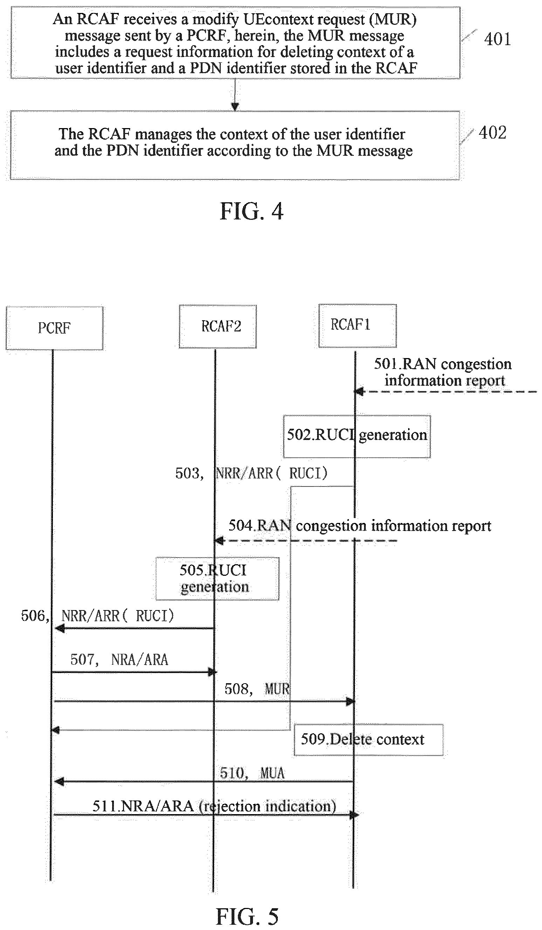

FIG. 4 is a flow chart of another method for managing congestion information provided in an embodiment of the present invention. The method shown in FIG. 4 includes the following steps 401 and 402.

In step 401, an RCAF receives a modify UEcontext request, MUR, message sent by a PCRF, herein, the MUR message includes request information for deleting context of a user identifier and a PDN identifier stored in the RCAF.

In step 402, the RCAF manages the context of the user identifier and the PDN identifier according to the MUR message.

In the embodiment, when the RCAF interacts with the PCRF, after the MUR message is received, if the RCAF determines that the RUCI has been reported to the PCRF and the response message for the RUCI is not received, the RCAF deletes the context or marks the context as waiting for being updated, to ensure that the RCAF also correctly processes the context, and the occurrence of mistaken operation is reduced.

The methods of the embodiments will be illustrated by way of application examples.

### Application Example One

FIG. 5 is a schematic view of the interaction of a method for managing congestion information provided in application example one of the present invention. In the method shown in FIG. 5, UE1 is initially located in a congestion area managed by RCAF1 and the context stored in PCRF also indicates that the UE1 is located in the congestion area managed by the RCAF1, and then the UE1 moves and the UE1 moves to a congestion area managed by RCAF2.

In step 501, the RCAF1 obtains OAM information related to congestion and the congestion area, from an RAN OAM. For UTRAN access, the RCAF1 further obtains a user identifier under the congestion area. For E-UTRAN access, the RCAF1 obtains a user identifier in the congestion area and an activated APN (i.e., the PDN identifier) corresponding to the user identifier in the congestion area from an MME. For the UTRAN access, the RCAF1 obtains an APN (i.e., PDN identifier) corresponding to a user identifier in a congestion area from an SGSN. Assume that UE1 (user identifier 1) is located in the congestion area, and an activated APN is PDN identifier 1; herein, the congestion level, at which the congestion area where the UE1 is located, changes from congestion level 1 to congestion level 2.

In step 502, the RCAF1 sets up RUCI according to the information obtained in step 501, herein, RUCI of a combination (user identifier 1, PDN identifier 1) is (user identifier 1, PDN identifier 1, congestion area identifier, congestion level 2, RCAF1 address).

In step 503, the RCAF1 individually sends the RUCI of the combination (User identifier 1, PDN identifier) to the PCRF by adopting an NRR message. If the RCAF1 acquires a PCRF address corresponding to the combination (user identifier 1, PDN identifier 1), the RCAF1 may also encapsulate the RUCI of the combination (user identifier 1, PDN identifier) and RUCI of the combination of another user identifier and another PDN identifier in one ARR message, and then sends the ARR message to a destination PCRF; since the message is delayed, the PCRF does not receive the message immediately.

In step 504, the UE1 moves from a congestion area managed by the RCAF1 to a congestion area managed by RCAF2. The RCAF2 obtains OAM information related to congestion and congestion area from the RAN OAM. For the UTRAN access, the RCAF1 further obtains the user identifier in the congestion area. For the E-UTRAN access, the RCAF2 obtains the user identifier and activated APN (i.e., the PDN identifier) corresponding to the user identifier under the congestion area from the MME. For the UTRAN access, the RCAF2 obtains an APN (i.e., PDN identifier) corresponding to a user identifier under a congestion area, from an SGSN. Since the UE1 moves to the congestion area (congestion level is 1), the RCAF2 obtains the user identifier 1, the PDN identifier 1, and congestion information corresponding to the combination (user identifier 1, PDN identifier 1).

In step 505, the RCAF2 sets up RUCI according to the information obtained in step 504, herein, the RUCI of the combination (user identifier 1, PDN identifier 1) is (user identifier 1, PDN identifier 1, congestion area identifier, congestion level 1, RCAF2 address).

In step 506, since the UE1 just moves to the area managed by the RCAF2, the RCAF2 does not know the PCRF address corresponding to the combination (user identifier 1, PDN identifier 1), thus, the PCAF2 individually sends the RUCI of the combination (User identifier 1, PDN identifier) by adopting an NRR message to the PCRF.

In step 507, according to the RUCI in the step 506, the PCRF updates the context of the combination (user identifier 1, PDN identifier 1) stored in the PCRF, which is updated to (user identifier 1, PDN identifier 1, congestion area identifier, congestion level 1, RCAF2 address), and then the PCRF returns an acknowledgment message to the RCAF2.

In step 508, the PCRF determines that the UE1 has moved from the RCAF1 to the RCAF2, thus, the PCRF sends an MUR message to the RCAF1 to request deleting the context corresponding to the combination (user identifier 1, PDN identifier 1), which is stored in the RCAF1.

In step 509, the RCAF1 receives the MUR message, and deletes the context in the RCAF1 corresponding to the combination (user identifier 1, PDN identifier 1) according to the MUR message; if the PDN identifier 1 is the last PDN identifier of the user identifier 1, the RCAF1 deletes all the context of the user identifier 1.

In step 510, the RCAF1 returns the_acknowledgment message MUA to the PCRF.

In step 511, at this point, the PCRF receives the Non-aggregated RUCI Report (NRR for short)/Aggregated RUCI Report (ARR for short) message sent by RCAF1 in step 503, but the PCRF determines that the MUR message has been sent to the RCAF1 to delete the context corresponding to the combination (user identifier 1, PDN identifier 1), thereby the NRA/ARA, which is a response message responded by the PCRF to the RCAF1, carries an indication for rejecting to the RUCI report, and the NRA/ARA may carries the reason for rejecting the RUCI report, for example, deletion of the context or the pending transaction is being performed, and the context stored in the PCRF is not updated according to the RUCI report. After the RCAF1 receives the NRA/ARA message, the RCAF1 confirms that the RUCI report is invalid and the corresponding context has been deleted.

According to the above-mentioned process, the correct congestion information are stored in the PCRF, and RCAF1 also correctly deletes the context corresponding to the combination (user identifier 1, PDN identifier 1).

### Application Example Two

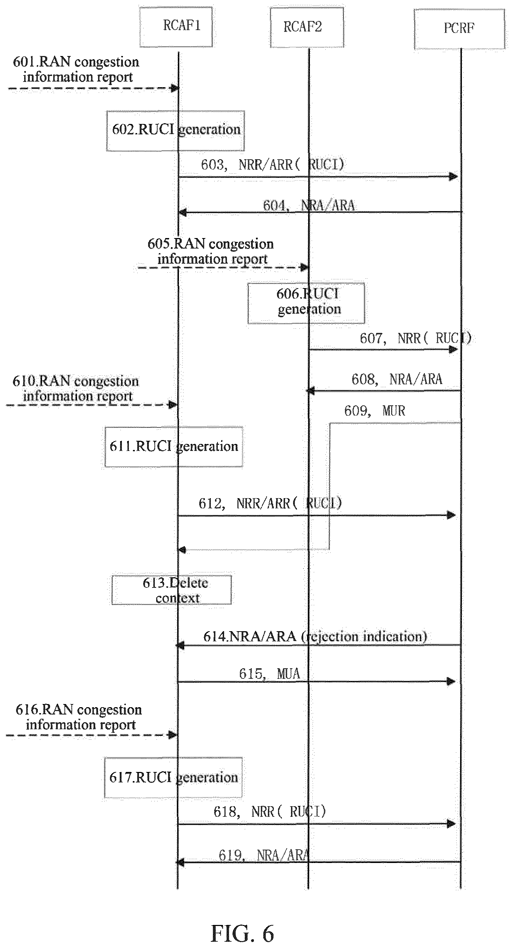

FIG. 6 is a schematic view of interaction of a method for managing congestion information provided in application example two of the present invention. In the method shown in FIG. 6, UE1 is initially in a congestion area managed by RCAF1 and context stored in PCRF also indicates that the UE1 is in the congestion area managed by the RCAF1, and then the UE1 moves to a congestion area managed by RCAF2, and then the UE1 moves back to the congestion area managed by the RCAF1 again.

In step 601, the RCAF1 obtains OAM information related to congestion and the congestion area from an RAN OAM. For UTRAN access, the RCAF1 further obtains the user identifier under the congestion area. For E-UTRAN access, the RCAF1 obtains a user identifier and an activated APN (i.e., the PDN identifier) corresponding to the user identifier under a congestion area from an MME. For the UTRAN access, the RCAF1 obtains an APN (i.e., PDN identifier) corresponding to a user identifier under a congestion area from an SGSN. Assume that UE1 (user identifier 1) is located in the congestion area, and an activated APN is PDN identifier 1; herein, congestion level at which the UE1 is located in the congestion area is from congestion level 1 to congestion level 2.

In step 602, the RCAF1 sets up RUCI according to the information obtained in step 601, herein, RUCI of the combination (user identifier 1, PDN identifier 1) is (user identifier 1, PDN identifier 1, congestion area identifier, congestion level 2, RCAF1 address).

In step 603, the RCAF1 individually sends the RUCI of the combination (User identifier 1, PDN identifier 1) to the PCRF by using an NRR message. If the RCAF1 obtains a PCRF address corresponding to the combination (user identifier 1, PDN identifier 1), the RCAF1 may also encapsulate the RUCI of the combination (user identifier 1, PDN identifier 1) and RUCI of a combination of another user identifier and another PDN identifier in one ARR message, and then sends the ARR to a destination PCRF.

In step 604, after receiving the RUCI, the PCRF updates the stored context and returns an acknowledgement message to the RCAF1, herein, the context of the combination (user identifier 1, PDN identifier 1) is (user identifier 1, PDN identifier 1, congestion area identifier, congestion level 2, RCAF1 address).

In step 605, the UE1 moves from the congestion area managed by the RCAF1 to the congestion area managed by the RCAF2; the RCAF2 obtains OAM information related to congestion and a congestion area from the RAN OAM. For the UTRAN access, the RCAF2 further obtains the user identifier under the congestion area. For the E-UTRAN access, the RCAF2 obtains the user identifier and activated APN (i.e., the PDN identifier) corresponding to the user identifier under the congestion area, from the MME. For the UTRAN access, the RCAF2 obtains the APN (i.e., the PDN identifier) corresponding to the user identifier under the congestion area, from the SGSN. Since the UE1 moves the congestion area (congestion level is 1), the RCAF2 obtains the user identifier 1, the PDN identifier 1, and corresponding congestion information.

In step 606, the RCAF2 sets up RUCI according to the information obtained in step 606, herein, the RUCI of the combination (user identifier 1, PDN identifier 1) is (user identifier 1, PDN identifier 1, congestion area identifier, congestion level 1, RCAF2 address).

In step 607, since the UE1 just moves to the area managed by the RCAF2, the RCAF does not know the PCRF address corresponding to the combination (user identifier 1, PDN identifier 1), thus, the PCAF sends the RUCI of the combination (User identifier 1, PDN identifier 1) by using an NRR message, to the PCRF.

In step 608, the PCRF updates the context of the combination (user identifier 1, PDN identifier 1), for example (user identifier 1, PDN identifier 1, congestion area identifier, congestion level 1, RCAF2 address) according to the RUCI, and then the PCRF returns an acknowledgment message to the RCAF2.

In step 609, the PCRF determines that the UE1 has moved from the RCAF1 to the RCAF2, thus, the PCRF sends the MUR message to the RCAF1 to request deleting the context corresponding to the combination (user identifier 1, PDN identifier 1), which is stored in the RCAF1.

In step 610, at the same time, when the RCAF2 is aware of the UE1 moving to the congestion area managed by the RCAF2, and then reports the RUCI corresponding to the combination (user identifier 1, PDN identifier 1), and the UE1 moves from the congestion area managed by the RCAF2 to the congestion area managed by the RCAF1 again; the RCAF obtains OAM information related to congestion and a congestion area from the RAN OAM. For the UTRAN access, the RCAF1 further obtain the user identifier under the congestion area. For the E-UTRAN access, the RCAF1 obtains the user identifier and an activated APN (i.e., the PDN identifier) corresponding to the user identifier under the congestion area, from the MME. For the UTRAN access, the RCAF1 obtains the APN (i.e., the PDN identifier) corresponding to the user identifier under the congestion area, from the SGSN. In addition, the congestion level of the congestion area changes from congestion level 2 to congestion level 1.

In step 611, the RCAF1 sets up RUCI according to the information obtained in step 610, herein, the RUCI corresponding to the combination (user identifier 1, PDN identifier 1) is (user identifier 1, PDN identifier 1, congestion area identifier, congestion level 1, RCAF1 address).

In step 612, the RCAF1 individually sends the RUCI of the combination (User identifier 1, PDN identifier 1) to the PCRF by using the NRR message. If the RCAF1 obtains the PCRF address corresponding to the combination (user identifier 1, PDN identifier 1), the RCAF1 may also encapsulate the RUCI of the combination (user identifier 1, PDN identifier 1) and RUCI of a combination of another user identifier and another PDN identifier in one ARR message, and then sends the ARR message to a destination PCRF.

In step 613, at this point, the RCAF1 receives the MUR message sent in the step 609, and deletes the context corresponding to the combination (user identifier 1, PDN identifier 1) according to the MUR message; if the PDN identifier 1 is the last PDN identifier of the user identifier 1, the RCAF1 deletes all the context of the user identifier 1.

In step 614, at this point, the PCRF receives the NRR/ARR message sent by RCAF1, but the PCRF determines that the MUR message has been sent to the RCAF1 to delete the context corresponding to the combination (user identifier 1, PDN identifier 1), thereby the NRA/ARA, which is a response message by the PCRF to the RCAF1, carries the indiction for rejecting the RUCI report, and the NRA/ARA may carries the reason for rejecting the RUCI report, such as, deletion of the context or pending transaction is being performed, and the context according to the combination (user identifier 1, PDN identifier 1), which is stored in the PCRF, is not updated according to the RUCI report in the step 612.

In step 615, according to the MUR message in the step 609, the RCAF1 deletes the context corresponding to the combination (user identifier 1, PDN identifier 1) stored in the RCAF1.

In step 616, after that, the UE1 continues to stay in the congested area managed by the RCAF1; the RCAF1 obtains OAM information related to congestion and a congestion area, from the RAN OAM again. For the UTRAN access, the RCAF1 further obtain the user identifier under the congestion area. For the E-UTRAN access, the RCAF1 obtains the user identifier and the activated APN (i.e., the PDN identifier) corresponding to the user identifier under the congested area, from the MME. For the UTRAN access, the RCAF1 obtains the APN (i.e., the PDN identifier) corresponding to the user identifier under the congestion area, from the SGSN. Since the UE1 still stays in the congestion area, the RCAF1 obtains the user identifier 1, the PDN identifier 1, and corresponding congestion information (a congestion level is 1) again.

In step 617, since the original context which corresponds to the combination (user identifier 1, PDN identifier 1) and which is stored in the RCAF1 is deleted, the RCAF1 sets up RUCI according to the information obtained in step 616, herein, the RUCI corresponding to the combination (user identifier 1, PDN identifier 1) is (user identifier 1, PDN identifier 1, congestion area identifier, congestion level 1, RCAF1 address).

In step 618, the RCAF1 individually sends the RUCI of the combination (user identifier 1, PDN identifier 1) to the PCRF by using an NRR message, herein, the RUCI of the combination (user identifier 1, PDN identifier 1) is (user identifier 1, PDN identifier 1, congestion area identifier, congestion level 1, RCAF1 address).

In step 619, according to the RUCI in step 618, the PCRF updates the context; herein the context of the combination (user identifier 1, PDN identifier 1) is (user identifier 1, PDN identifier 1, congestion area identifier, congestion level 1, RCAF1 address).

According to the above-mentioned process, the RCAF1 and the PCRF finally achieve the synchronization of congestion information.

### Application Example Three

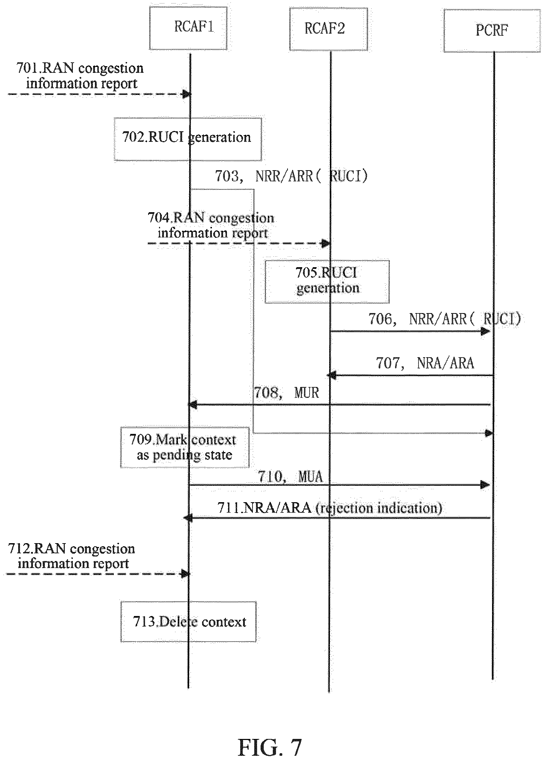

FIG. 7 is a schematic view of interaction of a method for managing congestion information provided in application example three of the present invention. In the method shown in FIG. 7, UE1 is initially in a congestion area managed by RCAF1 and the context stored in the PCRF also indicates that the UE1 is in the congestion area managed by the RCAF1, and then the UElmoves to a congestion area managed by RCAF2.

In step 701, the RCAF1 obtains - OAM information related to congestion and a congestion area from an RAN OAM. For UTRAN access, the RCAF1 further obtains the user identifier under the congestion area. For E-UTRAN access, the RCAF1 obtains the user identifier and activated APN (i.e., the PDN identifier) corresponding to the user identifier under the congestion area from MME. For the UTRAN access, the RCAF1 obtains the APN (i.e., PDN identifier) corresponding to the user identifier under the congestion area from the SGSN. Assume that UE1 (user identifier 1) is located in the congestion area, and an activated APN is PDN identifier 1; herein, congestion level at which the UE1 is located in the congestion area is from congestion level 1 to congestion level 2.

In step 702, the RCAF1 sets up RUCI according to the information obtained in step 701, herein, the RUCI of the combination (user identifier 1, PDN identifier 1) is (user identifier 1, PDN identifier 1, congestion area identifier, congestion level 2, RCAF1 address).

In step 703, the RCAF1 individually sends the RUCI of the combination (User identifier 1, PDN identifier 1) to the PCRF by using the NRR message. If the RCAF1 obtains the PCRF address corresponding to the combination (user identifier 1, PDN identifier 1), the RCAF1 may also encapsulate the RUCI of the combination (user identifier 1, PDN identifier 1) and RUCI of a combination of another user identifier land another PDN identifier in one ARR message, and then sends the ARR message to a destination PCRF. Since the message is delayed, the PCRF does not receive the message immediately.

In step 704, the UE1 moves from the congestion area managed by the RCAF1 to the congestion area managed by the RCAF2; the RCAF2 obtains OAM information related to congestion and a congestion area, from the RAN OAM. For the UTRAN access, the RCAF1 further obtain the user identifier under the congestion area. For the E-UTRAN access, the RCAF2 obtains a user identifier and an activated APN (i.e., the PDN identifier) corresponding to the user identifier under the congestion area, from the MME. For the UTRAN access, the RCAF2 obtains an APN (i.e., the PDN identifier) corresponding to a user identifier under the congestion area, from an SGSN. Since the UE1 moves to the congestion area (a congestion level is 1), the RCAF2 obtains the user identifier 1, the PDN identifier 1, and corresponding congestion information.

In step 705, the RCAF2 sets up RUCI according to the information obtained in step 704, herein, the RUCI of the combination (user identifier 1, PDN identifier 1) is (user identifier 1, PDN identifier 1, congestion area identifier, congestion level 1, RCAF2 address).

In step 706, since the UE1 just moves to the area managed by the RCAF2, the RCAF2 does not know the PCRF address corresponding to the combination (user identifier 1, PDN identifier 1), thus, the PCAF2 sends the RUCI of the combination (User identifier 1, PDN identifier 1) to the PCRF by using the NRR message.

In step 707, according to the RUCI in the step 707, the PCRF updates the context of the combination (user identifier 1, PDN identifier 1) stored in the PCRF, to (user identifier 1, PDN identifier 1, congestion area identifier, congestion level 1, RCAF2 address), and then the PCRF returns an acknowledgment message to the RCAF2.

In step 708, the PCRF determines that the UE1 has been moved from the RCAF1 to the RCAF2, thus, the PCRF sends the MUR message to the RCAF1 to request deleting the context corresponding to the combination (user identifier 1, PDN identifier 1) stored in the RCAF1.

In step 709, the RCAF1 receives the MUR message, but the RCAF1 determines that the RUCI corresponding to the combination (user identifier 1, PDN identifier 1) has been reported to the PCRF, and the RCAF1 does not receive an answer message, thus the context corresponding to the combination (user identifier 1, PDN identifier 1) is marked as a pending state.

In step 710, the RCAF1 returns the acknowledgment message MUA to the PCRF.

In step 711, at this point, the PCRF receives the NRR/ARR message sent by RCAF1 in step 703, but the PCRF determines that the MUR message has been sent to the RCAF1 to delete the context corresponding to the combination (user identifier 1, PDN identifier 1), thereby the NRA/ARA, which is a response message responded by the PCRF to the RCAF1, carries the indication for rejecting the RUCI report, and the NRA/ARA may carries a reason for rejecting the RUCCI report, such as, the deletion of the context or pending transaction is being performed, and the context stored in the PCRF is not updated according to the reported RUCI; after receiving the NRA/ARA message, the RCAF1 confirms that the RUCI report is invalid.

It is to be noted that, in some situations, the RCAF1 first receives the message in step 708 and then receives the message in step 711, thus the RCAF determines to mark the context corresponding to the combination (user identifier 1, PDN identifier 1) as a pending state, according to that the RCAF1 receives the MUR message, and the RCAF has reported the RUCI to the PCRF but does not receives an answer message. And in some situations, the RCAF1 first receives the message in step 711 and then receives the message in step 706, thus the RCAF1 may determine that it is required to mark the context corresponding to the combination (user identifier 1, PDN identifier 1) as a pending state, according to the carried rejection indication.

In step 712, in the next period, the RCAF1 obtain - OAM information related to congestion and a congestion area, from the RAN OAM again. For the UTRAN access, the RCAF1 further obtains the user identifier under the congestion area. For the E-UTRAN access, the RCAF1 obtains the user identifier and activated APN (i.e., the PDN identifier) corresponding to the user identifier under the congestion area, from the MME. For the UTRAN access, the RCAF1 obtains the APN (i.e., the PDN identifier) corresponding to the user identifier under the congestion area, from the SGSN. Since the UE1 has been left from the congestion area, the RCAF1 does not obtain the user identifier 1, the PDN identifier 1, and corresponding congestion information (at congestion level 1) again.

In step 713, since the context corresponding to the combination (User identifier 1, PDN identifier 1) is the pending state, and RCAF1 does not detect that UE1 is in the congestion area managed by the RCAF1, thereby the RCAF1 deletes the context corresponding to the combination (User identifier 1, PDN identifier 1).

### Application Example Four

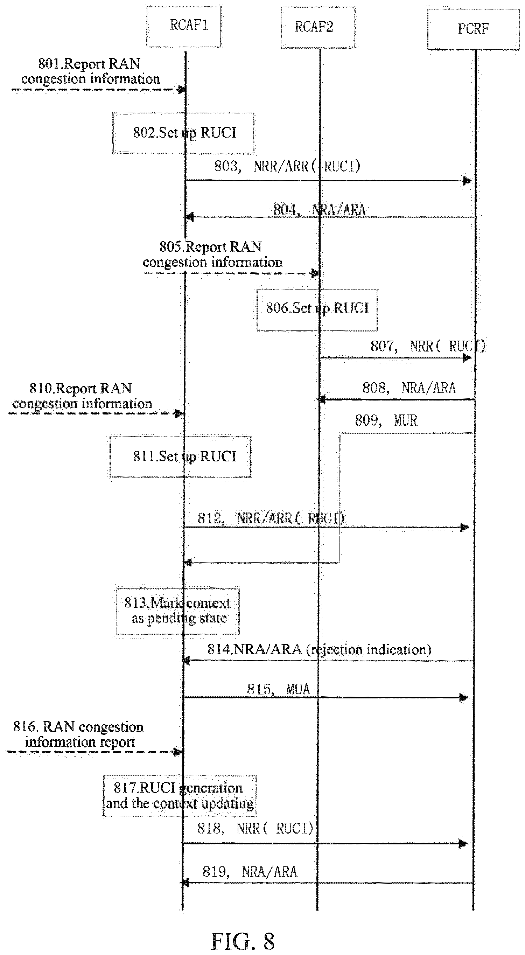

FIG. 8 is a schematic view of interaction of a method for managing congestion information provided in application example four of the present invention. In the method shown in FIG. 8, UE1 is initially in a congestion area managed by RCAF1 and context stored in PCRF also indicates that the UE1 is in the congestion area managed by the RCAF1, and then the UE1 moves to a congestion area managed by RCAF2, after that, the UE1 moves back to the congestion area managed by the RCAF1 again.

In step 801, the RCAF1 obtains - OAM information related to congestion and a congestion area, from an RAN OAM. For UTRAN access, the RCAF1 further obtains a user identifier under the congestion area. For E-UTRAN access, the RCAF1 obtains a user identifier and an activated APN (i.e., the PDN identifier) corresponding to the user identifier under the congestion area from an MME. For the UTRAN access, the RCAF1 corresponding an APN (i.e., PDN identifier) corresponding to a user identifier under the congestion area from an SGSN. Assume that UE1 (user identifier 1) is located in the congestion area, and an activated APN is PDN identifier 1; herein, congestion level at which the UE1 is located in the congestion area is from congestion level 1 to congestion level 2.

In step 802, the RCAF1 sets up RUCI according to the information obtained in step 801, herein, the RUCI of the combination (user identifier 1, PDN identifier 1) is (user identifier 1, PDN identifier 1, congestion area identifier, congestion level 2, RCAF1 address).

In step 803, the RCAF1 individually sends the RUCI of the combination (User identifier 1, PDN identifier 1) to the PCRF by using an NRR message. If the RCAF1 individually a PCRF address corresponding to the combination (user identifier 1, PDN identifier 1), the RCAF1 may also encapsulate the RUCI of the combination (user identifier 1, PDN identifier 1) and RUCI of a combination of another user identifier and another PDN identifier in one ARR message, and then sends the ARR message to a destination PCRF by the RCAF1.

In step 804, after receiving the RUCI, the PCRF updates the stored context and returns an acknowledgement message to the RCAF1, herein, the context of the combination (user identifier 1, PDN identifier 1) is (user identifier 1, PDN identifier 1, congestion area identifier, congestion level 2, RCAF1 address).

In step 805, the UE1 moves from the congestion area managed by the RCAF1 to the congestion area managed by the RCAF2; the RCAF2 obtains - OAM information related to congestion and a congestion area, from the RAN OAM. For the UTRAN access, the RCAF2 further obtains a user identifier under the congestion area. For the E-UTRAN access, the RCAF2 obtains a user identifier and activated APN (i.e., the PDN identifier) corresponding to the user identifier under the congestion area, from the MME. For the UTRAN access, the RCAF2 acquires the APN (i.e., the PDN identifier) corresponding to the user identifier under the congestion area, from the SGSN. Since the UE1 moves to the congestion area (at congestion level 1), the RCAF2 obtains the user identifier 1, the PDN identifier 1, and corresponding congestion information.

In step 806, the RCAF2 sets up RUCI according to the information obtained in step 805, herein, the RUCI of the combination (user identifier 1, PDN identifier 1) is (user identifier 1, PDN identifier 1, congestion area identifier, congestion level 1, RCAF2 address).

In step 807, since the UE1 just moves to the area managed by the RCAF2, the RCAF2 does not know the PCRF address corresponding to the combination (user identifier 1, PDN identifier 1), thus, the PCAF2 sends the RUCI of the combination (User identifier 1, PDN identifier 1) to the PCRF by using the NRR message.

In step 808, the PCRF updates the context of the combination (user identifier 1, PDN identifier 1), for example, (user identifier 1, PDN identifier 1, congestion area identifier, congestion level 1, RCAF2 address) according to the RUCI, and then the PCRF returns an acknowledgment message to the RCAF2.

In step 809, the PCRF determines that the UE1 has moved from the RCAF1 to the RCAF2, thus, the PCRF sends the MUR message to the RCAF1 to request deleting the context corresponding to the combination (user identifier 1, PDN identifier 1), which is stored in the RCAF1.

In step 810, at the same time, when the RCAF2 is aware of movement of the UE1 to the congestion area managed by the RCAF2, and then reports the RUCI corresponding to the combination containing (user identifier 1, PDN identifier 1), the UE1 moves from the congestion area managed by the RCAF2 to the congestion area managed by the RCAF1 again; the RCAF obtains OAM information related to congestion and a congestion area, from the RAN OAM. For the UTRAN access, the RCAF1 further obtains the user identifier under the congestion area. For the E-UTRAN access, the RCAF1 acquires the user identifier and the activated APN (i.e., the PDN identifier) corresponding to the user identifier under the congestion area, from the MME. For the UTRAN access, the RCAF1 obtains the APN (i.e., the PDN identifier) corresponding to the user identifier under the congestion area, from the SGSN. In addition, the congestion level of the congestion area changes from congestion level 2 to congestion level 1.

In step 811, the RCAF1 sets up RUCI according to the information obtained in step 810, herein, the RUCI corresponding to the combination (user identifier 1, PDN identifier 1) is (user identifier 1, PDN identifier 1, congestion area identifier, congestion level 1, RCAF1 address).

In step 812, the RCAF1 individually sends the RUCI of the combination (User identifier 1, PDN identifier 1) to the PCRF by using the NRR message. If the RCAF1 obtains the PCRF address corresponding to the combination (user identifier 1, PDN identifier 1), the RCAF1 may also encapsulate the RUCI of the combination (user identifier 1, PDN identifier 1) and RUCI of a combination of another user identifier 1 and another PDN identifier in one ARR message, and then sends the ARR message to a destination PCRF.

In step 813, at this point, the RCAF1 receives the MUR message sent in the step 809, the RCAF1 determines that the RUCI corresponding to the combination (user identifier 1, PDN identifier 1) has been reported to the PCRF, but the RCAF1 does not receive an answer message, thereby the context corresponding to the combination (user identifier 1, PDN identifier 1) is marked as a pending state.

In step 814, at this point, the PCRF receives the NRR/ARR message sent by RCAF1, but the PCRF determines that the MUR message has been sent to the RCAF1 to delete the context corresponding to the combination (user identifier 1, PDN identifier 1), thereby the NRA/ARA, which is a response message responds by the PCRF to the RCAF1, carries an indication for rejecting the RUCI report, and the NRA/ARA may carries a reason for rejecting the RUCI report, such as, deletion of the context or the pending transaction is being performed, and the context corresponding to the combination (user identifier 1, PDN identifier 1), which is stored in the PCRF, is not updated according to the RUCI report in the step 812; after receiving the NRA/ARA message, the RCAF1 determines the RUCI report is invalid.

It is to be noted that, in some situations, the RCAF1 first receives the message in step 809 and then receives the message sent in step 814, thus the RCAF1 determines to mark the context corresponding to the combination (user identifier 1, PDN identifier 1) as a pending state, according to that the RCAF1 receives the MUR message, and has reported the RUCI of the combination of (user identifier 1, PDN identifier 1) to the PCRF but does not receive an answer message .And in some situations, the RCAF1 first receives the message in step 814 and then receives the message in step 809, thus the RCAF1 may determine that it is required to mark the context corresponding to the combination (user identifier 1, PDN identifier 1) as a pending state, according to the carried rejection indication.

In step 815, the RCAF1 returns the MUA message to the PCRF.

In step 816, after that, the UE1 continues to stay in the congested area managed by the RCAF1; the RCAF1 obtains OAM information related to congestion and a congestion area, from the RAN OAM again. For the UTRAN access, the RCAF1 further acquires a user identifier under the congestion area. For the E-UTRAN access, the RCAF1 obtains a user identifier and an activated APN (i.e., the PDN identifier) corresponding to the user identifier under the congested area, from the MME. For the UTRAN access, the RCAF1 obtains an APN (i.e., the PDN identifier) corresponding to a user identifier under the congestion area, from the SGSN. Since the UE1 still stays in the congestion area, the RCAF1 obtains the user identifier 1, the PDN identifier 1, and corresponding congestion information (at congestion level 1) again.

In step 817, the RCAF1 sets up RUCI according to the information obtained in step 816, herein, the RUCI corresponding to the combination (user identifier 1, PDN identifier 1) is (user identifier 1, PDN identifier 1, congestion area identifier, congestion level 1, RCAF1 address). Because the context is marked as the pending state, it is required to report the RUCI to the PCRF, even the RUCI newly generated by the RCAF1 is identical to the RUCI previously stored in the RCAF1.

In step 818, the RCAF1 individually sends the RUCI of the combination (user identifier 1, PDN identifier 1) by using an NRR message to the PCRF, herein, the RUCI of the combination (user identifier 1, PDN identifier 1) is (user identifier 1, PDN identifier 1, congestion area identifier, congestion level 1, RCAF1 address).

In step 819, according to the RUCI in the step 818, the PCRF updates the context of the combination (user identifier 1, PDN identifier 1) to (user identifier 1, PDN identifier 1, congestion area identifier, congestion level 1, RCAF1 address); and then the PCRF returns an acknowledgment message to the RCAF1; after receiving the acknowledgment message, the RCAF1 deletes the mark of the pending state of the context.

According to the above-mentioned process, the RCAF1 and the PCRF finally achieve the synchronization of congestion information.

### Embodiment Three

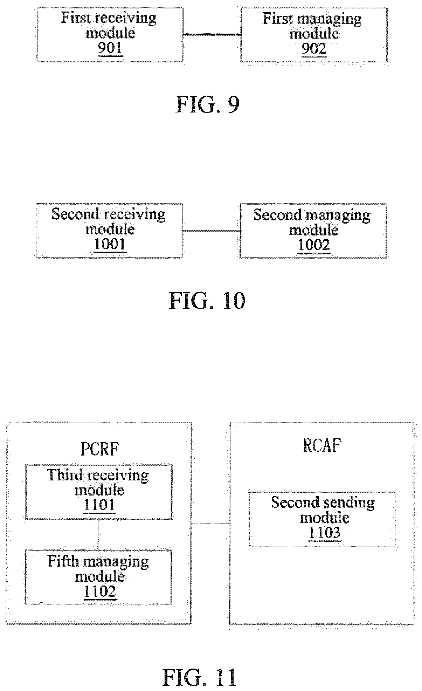

FIG. 9 is a structural diagram of an apparatus for managing congestion information provided in the embodiment three of the present invention. The apparatus shown in FIG. 9 includes a first receiving module 901 and a first managing module 902.

The first receiving module 901 is configured to receive an RAN user plane congestion information, RUCI, report sent by an RAN congestion awareness function, RCAF, herein, the RUCI report includes a user identifier and a Packet Data Network, PDN, identifier.

The first managing module 902 is configured to, if determining an answer message to a Modify UE context Request, MUR, message sent to the RCAF is not received, reject the RUCI report herein, the MUR message includes request information for deleting the context of the user identifier and the PDN identifier stored in the RCAF.

In an exemplary embodiment, the apparatus further includes a first sending module.

The first sending module is configured to send an answer message for the RUCI report to the RCAF, herein, the answer message carries indication information for rejecting the RUCI report and/or a reason for rejecting the RUCI report.

In an exemplary embodiment, the reason for rejecting the report is that deletion of the context or the pending transaction is being performed.

For the apparatus provided in the embodiment, when the PCRF interacts with the RCAF, after the RUCI report of the combination of the user identifier and the PDN identifier is received, if the PCRF determines that the MUR message which requests deleting the context of the combination of the user identifier and the PDN identifier has been sent, but the answer message for the MUR message is not received, the PCRF rejects the RUCI report to ensure that correct congestion information is stored locally, and the occurrence of a mistaken operation is reduced.

### Embodiment Four

FIG. 10 is a structural diagram of another apparatus for managing congestion information provided in an embodiment of the present invention. The apparatus shown in FIG. 10 includes a second receiving module 1001 and a second managing module 1002.

The second receiving module 1001 is configured to receive a modify UEcontext request, MUR, message which is sent by a policy and charging rules Function, PCRF, herein, the MUR message includes request information for the deletion of context of a user identifier and a PDN identifier, which is stored in the RCAF.

The second managing module 1002 is configured to manage the context of the user identifier and the PDN identifier according to the MUR message.

In an exemplary embodiment, the second managing module 1002 is configured to delete the context of the user identifier and the PDN identifier according to the MUR message.

In an exemplary embodiment, the apparatus further includes a second sending module configured to: send a new RUCI report including the user identifier and the PDN identifier to the PCRF, if the congestion information of the user identifier and the PDN identifier is received.

In an exemplary embodiment, the second managing module 1002 is configured to, if a response message to the RUCI report is not received when the MUR message is received, mark the context of the user identifier and the PDN identifier stored in the RCAF, as a pending state.

In an exemplary embodiment, the second managing module 1002 is configured to,
after an answer message for rejecting the RUCI report is received, mark the context of the user identifier and the PDN identifier stored in the RCAF, as a pending state.

In an exemplary embodiment, the apparatus further includes a third managing module.

The third managing module is configured to, if the congestion information of the user identifier and the PDN identifier is subsequently received, send a new RUCI report including the user identifier and the PDN identifier to the PCRF; and if the congestion information of the user identifier and the PDN identifier is not received, delete the context of the user identifier and the PDN identifier, which is stored in the RCAF.

In an exemplary embodiment, the apparatus further includes a fourth managing module.

The fourth managing module is configured to delete a mark of the pending state after an answer message for a new RUCI report is received.

For the apparatus provided in the embodiment, when the RCAF interacts with the PCRF, after the MUR message is received, if the RCAF determines that the RUCI has been reported to the PCRF but the answer message for the RUCI is not received, the RCAF deletes the context or marks the context as waiting for updating, to ensure that the RCAF also correctly processes the context, and the occurrence of mistaken operation is reduced.

### Embodiment Five

FIG. 11 is a structural diagram of a system for managing congestion information provided in an embodiment of the present invention. The system shown in FIG. 11 includes a policy and charging rules function, PCRF, and an RAN congestion awareness function, RCAF.

The PCRF includes a third receiving module 1101 and a fifth managing module 1102.

The third receiving module 1101 is configured to receive an RAN user plane congestion information, RUCI, report sent by an RAN congestion awareness function, RCAF, herein, the RUCI report includes a user identifier and a Packet Data Network, PDN, identifier.

The fifth managing module 1102 is configured to, if determining a response message to a Modify UEcontext Request, MUR, message sent to the RCAF is not received, reject the RUCI report, herein, the MUR message includes request information for deleting the context of the user identifier and the PDN identifier stored in the RCAF.

The RCAF includes a fourth receiving module 1103.

The fourth receiving module 1103 is configured to receive the MUR message sent by the PCRF, herein, the MUR message includes the request information for deleting the context of the user identifier and the PDN identifier stored in the RCAF.

In an exemplary embodiment, the PCRF further includes a third sending module.

The third sending module is configured to send an answer message for the RUCI report to the RCAF, herein, the response message carries indication information for rejecting the RUCI report and/or a reason for rejecting the RUCI report.

Herein, the reason for rejecting the report is that deletion of the context or the pending transaction is being performed.

Herein, the RCAF further includes a sixth managing module.

The sixth managing module is configured to delete the context of the user identifier and the PDN identifier according to the MUR.

Herein, the RCAF further includes a fourth sending module.

The fourth sending module is configured to, if the congestion information of the user identifier and the PDN identifier is received subsequently, send a new RUCI report including the user identifier and the PDN identifier to the PCRF.

Herein, the RCAF further includes a seventh managing module.

The seventh managing module is configured to, if an answer message for the RUCI report sent to the PCRF is not received when the MUR message is received, mark the context of the user identifier and the PDN identifier stored in the RCAF, as a pending state.

Herein, the RCAF further includes an eighth managing module.

The eighth managing module is configured to, after an answer message for rejecting the RUCI report is received, mark the context of the user identifier and the PDN identifier stored in the RCAF, as a pending state.

Herein, the RCAF further includes a ninth managing module.

The ninth managing module is configured to, if the congestion information of the user identifier and the PDN identifier is subsequently received, send a new RUCI report including the user identifier and the PDN identifier to the PCRF; and if the congestion information of the user identifier and the PDN identifier is not received, delete the context of the user identifier and the PDN identifier stored in the RCAF.

Herein, the RCAF further includes a tenth managing module.

The tenth managing module is configured to, after an answer message for a new RUCI report is received, delete the mark of the pending state.

For the system provided in the embodiment, when the PCAF interacts with the PCRF, after the MUR message is received, if the RCAF determines that the RUCI has been reported to the PCRF but the answer message for the RUCI is not received, the RCAF deletes the context or marks the context as waiting for updating, to ensure that the RCAF also correctly processes the context, and the occurrence of mistaken operation is reduced.

Those skilled in the art can understand that all or parts of steps of the above-mentioned embodiments can be implemented by using computer program processes. The computer program can be stored in one computer readable storage medium. The computer program is executed on the corresponding hardware platform (e.g., system, equipment, apparatus, device, etc.), and when the computer program is executed, one of steps of the method embodiments or the combination thereof is included.

In an exemplary embodiment, all or parts of steps of the above-mentioned embodiments can also be implemented using integrated circuits, these steps can be fabricated into individual integrated circuit modules respectively, or multiple modules or steps in these steps are fabricated into a single integrated circuit to implement. Therefore, the embodiments of the present invention are not limited to any specific combination of the hardware and software.

Devices/functional modules/functional units in the above-mentioned embodiments can be implemented by using a general-purpose computing device, they can be centralized on a single computing device, or distributed on the network which consists of multiple computing devices.

Devices/functional modules/functional units in the above-mentioned embodiments are implemented in the form of software functional module, and when sold or used as a separate product, it can be stored in one computer readable storage medium. The above-mentioned computer readable storage medium can be read-only memory, disk or compact disc, etc.

### Industrial Applicability

In the embodiments of the present invention, when an RCAF interacts with a PCRF, local information is managed by the determination of the sending and receiving states of the messages, which ensures that correct congestion information is stored in the PCRF, the RCAF correctly processes context, and the occurrence of mistaken operation is reduced.

## Claims

1. A method for managing congestion information, **characterized by** comprising:
receiving, by a policy and charging rules function, PCRF, an radio access network, RAN, user plane congestion information, RUCI, report sent by a first RAN congestion awareness function, RCAF, wherein, the RUCI report comprises a user identifier and a Packet Data Network, PDN, identifier (301); and
the PCRF sending a modify UE context request, MUR, message to said first RCAF upon receiption from PCRF of a RUCI report sent from another RCAF and the PCRF determining that a UE has moved from the first RCAF to another RCAF;
if the PCRF does not receive an answer message for the MUR message sent to the first RCAF, rejecting, by the PCRF, the RUCI report sent by said first RCAF, wherein, the MUR message comprises request information for deleting context of the user identifier and the PDN identifier stored in said first RCAF (302).

2. The method according to claim 1, further comprising:
sending, by the PCRF, an answer message for the RUCI report to said first RCAF, wherein, the answer message carries indication information for rejecting the RUCI report and/or a reason for rejecting the RUCI report.

3. The method according to claim 2, wherein, the reason for rejecting the report is that deletion of the context or pending transaction is being performed.

4. A method for managing congestion information, **characterized by** comprising:
sending by a first radio access network, RAN, congestion awareness function RCAF, to a policy and charging rules function, PCRF, a radio access network, RAN, user plane congestion information, RUCI, report comprising a user identifier and a Packet Data Network, PDN, identifier (301),
receiving, by the first RCAF, a modify UE context request, MUR, message sent by a policy and charging rules function, PCRF when a UE has moved from the first RCAF to another RCAF, wherein, the MUR message comprises request information for deleting context of a user identifier and a PDN identifier stored in the first RCAF (401); and
managing, by said first RCAF, the context of the user identifier and the PDN identifier according to the MUR message (402);wherein, managing, by said first RCAF, the context of the user identifier and the PDN identifier according to the MUR message (402) comprises:
said first RCAF deleting the context of the user identifier and the PDN identifier according to the MUR, and
the method further comprises:
if said first RCAF subsequently receives congestion information of the user identifier and the PDN identifier, sending, by said first RCAF, a new RUCI report comprising the user identifier and the PDN identifier to the PCRF.
wherein, managing, by the RCAF, the context of the user identifier and the PDN identifier according to the MUR message (402) comprises:
if the first RCAF has not received an answer message for the RUCI report when the RCAF receives the MUR message, marking, by the RCAF, the context of the user identifier and the PDN identifier stored in the RCAF, as a pending state.

5. The method according to claim 4, wherein, managing, by the first RCAF, the context of the user identifier and the PDN identifier according to the MUR message comprises:
after said first RCAF receives, from the PCRF, an answer message for rejecting the RUCI report, marking, by said first RCAF, the context of the user identifier and the PDN identifier stored in said first RCAF, as a pending state.

6. The method according to claim 5, wherein, after marking, by said first RCAF, the context of the user identifier and the PDN identifier stored in said first RCAF, as the pending state, the method further comprises:
if said first RCAF subsequently receives the congestion information of the user identifier and the PDN identifier, sending, by said first RCAF, a new RUCI report comprising the user identifier and the PDN identifier to the PCRF; and if said first RCAF does not receive the congestion information of the user identifier and the PDN identifier, deleting, by said first RCAF, the context of the user identifier and the PDN identifier stored in said first RCAF, and
wherein, after sending, by said first RCAF, the new RUCI report comprising the user identifier and the PDN identifier to the PCRF, the method further comprises:
deleting, by said first RCAF, a mark of the pending state after receiving an answer message for the new RUCI report.

7. A Policy and charging Rules Function, PCRF, apparatus for managing congestion information, **characterized by** comprising:
a first receiving module (901), configured to receive an radio access network, RAN, user plane congestion information, RUCI, report sent by a first RAN congestion awareness function, RCAF, wherein, the RUCI report comprises a user identifier and a Packet Data Network, PDN, identifier; wherein a modify UE context request, MUR, message is from the PCRF to said first RCAF upon receiption from PCRF of a RUCI report sent from another RCAF and the PCRF determining that a UE has moved from said first RCAF to another RCAF; and
a first managing module (902), configured to reject the RUCI report if determining that an answer message for the MUR message is not received, wherein, the MUR message comprises request information for deleting context of the user identifier and the PDN identifier stored in the RCAF.

8. The PCRF apparatus according to claim 7, further comprising:
a first sending module, configured to send an answer message for the RUCI report to said first RCAF, herein, the answer message carries indication information for rejecting the RUCI report and/or a reason for rejecting the RUCI report,
wherein, the reason for rejecting the report is that deletion of the context or pending transaction is being performed.

9. A radio access, RAN, congestion awareness function, RCAF, apparatus for managing congestion information, **characterized by** comprising:
being configured for sending to a Policy and Charging Rules Function, PCRF, a radio access network, RAN, user plane congestion information, RUCI, report, comprising a user identifier and a Packet Data Network, PDN, identifier (301),
a second receiving module (1001), configured to receive a modify UE context request, MUR, message sent by said PCRF, when a UE has moved from the first RCAF to another RCAF, wherein, the MUR message comprises request information for deleting context of a user identifier and a PDN identifier stored in said first RCAF, and
a second managing module (1002), configured to manage the context of the user identifier and the PDN identifier according to the MUR message.
wherein, the second managing module (1002) is configured to:
delete the context of the user identifier and the PDN identifier according to a MUR, and
the apparatus further comprises:
a second sending module configured to, if congestion information of the user identifier and the PDN identifier is received subsequently, send a new RUCI report comprising the user identifier and the PDN identifier to the PCRF.
wherein, the second managing module (1002) is configured to,
if an answer message for the RUCI report is not received when the MUR message is received, mark the context of the user identifier and the PDN identifier stored in the RCAF, as a pending state.

10. The apparatus according to claim 9, wherein, the second managing module (1002) is configured to,
after an answer message for rejecting the RUCI report is received, mark the context of the user identifier and the PDN identifier stored in the RCAF, as a pending state.

11. The apparatus according to claim 10, further comprising:
a third managing module configured to, if the congestion information of the user identifier and the PDN identifier is subsequently received, send a new RUCI report comprising the user identifier and the PDN identifier to the PCRF; and if the congestion information of the user identifier and the PDN identifier is not received, delete the context of the user identifier and the PDN identifier stored in the RCAF,
wherein the apparatus further comprises:
a fourth managing module configured to, after an answer message for a new RUCI report is received, delete a mark of the pending state.

## Patentansprüche

1. Verfahren zum Managen von Überlastungsinformationen, **dadurch gekennzeichnet, dass** es Folgendes umfasst:
Empfangen, durch eine Policy and Charging Rules Function (PCRF), eines Radio Access Network (RAN) User Plane Congestion Information (RUCI)-Berichts, der durch eine erste RAN Congestion Awareness Function (RCAF) gesendet wird, wobei der RUCI-Bericht einen Nutzeridentifikator und einen Packet Data Network (PDN)-Identifikator umfasst (301); und
die PCRF sendet nach dem Empfang - von der PCRF - eines von einer anderen RCAF gesendeten RUCI-Berichts eine Modify UE Context Request (MUR)-Nachricht an die erste RCAF, und
die PCRF bestimmt, dass sich eine UE von der ersten RCAF zu einer anderen RCAF bewegt hat;
falls die PCRF keine Antwortnachricht auf die an die erste RCAF gesendete MUR-Nachricht empfängt, Ablehnen, durch die PCRF, des durch die erste RCAF gesendeten RUCI-Berichts,
wobei die MUR-Nachricht Anforderungsinformationen zum Löschen von Kontext des Nutzeridentifikators und des PDN-Identifikators, die in der ersten RCAF gespeichert sind, umfasst (302).

2. Verfahren nach Anspruch 1, das des Weiteren Folgendes umfasst:
Senden, durch die PCRF, einer Antwortnachricht auf den RUCI-Bericht an die erste RCAF,
wobei die Antwortnachricht Hinweisinformationen zum Ablehnen des RUCI-Berichts und/oder einen Grund für das Ablehnen des RUCI-Berichts transportiert.

3. Verfahren nach Anspruch 2, wobei der Grund für das Ablehnen des Berichts ist, dass eine Löschung des Kontexts oder einer anhängigen Transaktion ausgeführt wird.

4. Verfahren zum Managen von Überlastungsinformationen, **dadurch gekennzeichnet, dass** es Folgendes umfasst:
Senden, durch eine erste Radio Access Network (RAN) Congestion Awareness Function (RCAF) an eine Policy and Charging Rules Function (PCRF), eines Radio Access Network (RAN) User Plane Congestion Information (RUCI)-Berichts, der einen Nutzeridentifikator und einen Packet Data Network (PDN)-Identifikator umfasst (301), Empfangen, durch die erste RCAF, einer Modify UE Context Request (MUR)-Nachricht, die durch eine Policy and Charging Rules Function (PCRF) gesendet wird, wenn sich eine UE von der ersten RCAF zu einer anderen RCAF bewegt hat, wobei die MUR-Nachricht Anforderungsinformationen zum Löschen von Kontext eines Nutzeridentifikators und eines PDN-Identifikators, die in der ersten RCAF gespeichert sind, umfasst (401); und
Managen, durch die erste RCAF, des Kontextes des Nutzeridentifikators und des PDN-Identifikators gemäß der MUR-Nachricht (402);
wobei das Managen, durch die erste RCAF, des Kontextes des Nutzeridentifikators und des PDN-Identifikators gemäß der MUR-Nachricht (402) Folgendes umfasst:
die erste RCAF löscht den Kontext des Nutzeridentifikators und des PDN-Identifikators gemäß der MUR, und
wobei das Verfahren des Weiteren Folgendes umfasst:
falls die erste RCAF anschließend Überlastungsinformationen des Nutzeridentifikators und des PDN-Identifikators empfängt, Senden, durch die erste RCAF, eines neuen RUCI-Berichts, der den Nutzeridentifikator und den PDN-Identifikator umfasst, an die PCRF, wobei das Managen, durch die RCAF, des Kontextes des Nutzeridentifikators und des PDN-Identifikators gemäß der MUR-Nachricht (402) Folgendes umfasst:
falls die erste RCAF keine Antwortnachricht auf den RUCI-Bericht empfangen hat, wenn die RCAF die MUR-Nachricht empfängt, Markieren, durch die RCAF, des Kontextes des Nutzeridentifikators und des PDN-Identifikators, die in der RCAF gespeichert sind, als einen schwebenden Zustand.

5. Verfahren nach Anspruch 4, wobei das Managen, durch die erste RCAF, des Kontextes des Nutzeridentifikators und des PDN-Identifikators gemäß der MUR-Nachricht Folgendes umfasst:
nachdem die erste RCAF von der PCRF eine Antwortnachricht auf das Ablehnen des RUCI-Berichts empfangen hat, Markieren, durch die erste RCAF, des Kontextes des Nutzeridentifikators und des PDN-Identifikators, die in der ersten RCAF gespeichert sind, als einen schwebenden Zustand.

6. Verfahren nach Anspruch 5, wobei nach dem Markieren, durch die erste RCAF, des Kontextes des Nutzeridentifikators und des PDN-Identifikators, die in der ersten RCAF gespeichert sind, als den schwebenden Zustand, das Verfahren des Weiteren Folgendes umfasst:
falls die erste RCAF anschließend die Überlastungsinformationen des Nutzeridentifikators und des PDN-Identifikators empfängt, Senden, durch die erste RCAF, eines neuen RUCI-Berichts, der den Nutzeridentifikator und den PDN-Identifikator umfasst, zu der PCRF; und
falls die erste RCAF keine Überlastungsinformationen des Nutzeridentifikators und des PDN-Identifikators empfängt, Löschen, durch die erste RCAF, des Kontextes des Nutzeridentifikators und des PDN-Identifikators, die in der ersten RCAF gespeichert sind, und
wobei nach dem Senden, durch die erste RCAF, des neuen RUCI-Berichts, der den Nutzeridentifikator und den PDN-Identifikator umfasst, zu der PCRF, das Verfahren des Weiteren Folgendes umfasst:
Löschen, durch die erste RCAF, einer Markierung des schwebenden Zustands nach dem Empfangen einer Antwortnachricht auf den neuen RUCI-Bericht.

7. Policy and Charging Rules Function (PCRF)-Vorrichtung zum Managen von Überlastungsinformationen, **dadurch gekennzeichnet, dass** sie Folgendes umfasst:
ein erstes Empfangsmodul (901), das dafür konfiguriert ist, ein Radio Access Network (RAN) User Plane Congestion Information (RUCI)-Bericht zu empfangen, der durch eine erste RAN Congestion Awareness Function (RCAF) gesendet wird, wobei der RUCI-Bericht einen Nutzeridentifikator und einen Packet Data Network (PDN)-Identifikator umfasst; wobei eine Modify UE Context Request (MUR)-Nachricht von der PCRF an die erste RCAF gesendet wird, wenn - von der PCRF - ein von einer anderen RCAF gesendeter RUCI-Bericht empfangen wird, und die PCRF bestimmt, dass sich eine UE von der ersten RCAF zu einer anderen RCAF bewegt hat; und
ein erstes Management-Modul (902), das dafür konfiguriert ist, den RUCI-Bericht abzulehnen, falls bestimmt wird, dass keine Antwortnachricht auf die MUR-Nachricht empfangen wird, wobei die MUR-Nachricht Anforderungsinformationen zum Löschen von Kontext des Nutzeridentifikators und des PDN-Identifikators, die in der RCAF gespeichert sind, umfasst.

8. PCRF-Vorrichtung nach Anspruch 7, die des Weiteren Folgendes umfasst:
ein erstes Sendemodul, das dafür konfiguriert ist, eine Antwortnachricht auf den RUCI-Bericht an die erste RCAF zu senden,
wobei die Antwortnachricht Hinweisinformationen für das Ablehnen des RUCI-Bericht und/oder einen Grund für das Ablehnen des RUCI-Bericht transportiert,
wobei der Grund für das Ablehnen des Berichts ist, dass eine Löschung des Kontextes oder einer anhängigen Transaktion ausgeführt wird.

9. Radio Access Network (RAN) Congestion Awareness Function (RCAF)-Vorrichtung zum Managen von Überlastungsinformationen, **dadurch gekennzeichnet, dass** sie:
dafür konfiguriert ist, an eine Policy and Charging Rules Function (PCRF) einen Radio Access Network (RAN) User Plane Congestion Information (RUCI)-Bericht zu senden, der einen Nutzeridentifikator und einen Packet Data Network (PDN)-Identifikator umfasst (301),
ein zweites Empfangsmodul (1001) umfasst, das dafür konfiguriert ist,
eine durch die PCRF gesendete Modify UE Context Request (MUR)-Nachricht zu empfangen, wenn sich eine UE von der ersten RCAF zu einer anderen RCAF bewegt hat, wobei die MUR-Nachricht Anforderungsinformationen zum Löschen von Kontext eines Nutzeridentifikators und eines PDN-Identifikators, die in der ersten RCAF gespeichert sind, umfasst, und
ein zweites Management-Modul (1002) umfasst, das dafür konfiguriert ist, den Kontext des Nutzeridentifikators und des PDN-Identifikators gemäß der MUR-Nachricht zu managen,
wobei das zweite Management-Modul (1002) dafür konfiguriert ist, den Kontext des Nutzeridentifikators und des PDN-Identifikators gemäß einer MUR zu löschen, und
die Vorrichtung des Weiteren Folgendes umfasst:
ein zweites Sendemodul, das dafür konfiguriert ist, falls anschließend Überlastungsinformationen des Nutzeridentifikators und des PDN-Identifikators empfangen werden, einen neuen RUCI-Bericht, der den Nutzeridentifikator und den PDN-Identifikator umfasst, zu der PCRF zu senden,
wobei das zweite Management-Modul (1002) dafür konfiguriert ist, falls keine Antwortnachricht auf den RUCI-Bericht empfangen wird, wenn die MUR-Nachricht empfangen wird, den Kontext des Nutzeridentifikators und des PDN-Identifikators, die in der RCAF gespeichert sind, als einen schwebenden Zustand zu markieren.

10. Vorrichtung nach Anspruch 9, wobei das zweite Management-Modul (1002) dafür konfiguriert ist, nachdem eine Antwortnachricht auf das Ablehnen des RUCI-Bericht empfangen wurde, den Kontext des Nutzeridentifikators und des PDN-Identifikators, die in der RCAF gespeichert sind, als einen schwebenden Zustand zu markieren.

11. Vorrichtung nach Anspruch 10, die des Weiteren Folgendes umfasst:
ein drittes Management-Modul, das dafür konfiguriert ist, falls die Überlastungsinformationen des Nutzeridentifikators und des PDN-Identifikators anschließend empfangen werden, einen neuen RUCI-Bericht, der den Nutzeridentifikator und den PDN-Identifikator umfasst, zu der PCRF zu senden; und falls die Überlastungsinformationen des Nutzeridentifikators und des PDN-Identifikators nicht empfangen werden, den Kontext des Nutzeridentifikators und des PDN-Identifikators, die in der RCAF gespeichert sind, zu löschen,
wobei die Vorrichtung des Weiteren Folgendes umfasst:
ein viertes Management-Modul, das dafür konfiguriert ist, nachdem eine Antwortnachricht auf einen neuen RUCI-Bericht empfangen wurde, eine Markierung des schwebenden Zustands zu löschen.

## Revendications

1. Procédé de gestion d'informations d'encombrement, **caractérisé en ce qu'**il comprend :
la réception, par une fonction de règles de facturation et de politique, PCRF, d'un rapport d'informations d'encombrement de plan d'utilisateur, RUCI, de réseau d'accès radio, RAN, envoyé par une première fonction de prise de conscience d'encombrement de RAN, RACF, dans lequel le rapport de RUCI comprend un identifiant d'utilisateur et un identifiant de réseau de données en paquets, PDN, (301) ; et
l'envoi, par la PCRF, d'un message de demande de modification de contexte d'UE, MUR, à ladite première RCAF, à la réception, en provenance de la PCRF, d'un rapport de RUCI envoyé depuis une autre RCAF, et la détermination, par la PCRF, qu'un UE s'est déplacé de la première RCAF à une autre RCAF ;
si la PCRF ne reçoit pas un message de réponse pour le message de MUR envoyé à la première RCAF, le rejet, par la PCRF, du rapport de RUCI envoyé par ladite première RCAF, dans lequel le message de MUR comprend des informations de demande pour supprimer un contexte de l'identifiant d'utilisateur et de l'identifiant de PDN mémorisé dans ladite première RCAF (302).

2. Procédé selon la revendication 1, comprenant en outre :
l'envoi, par la PCRF, d'un message de réponse pour le rapport de RUCI à ladite première RCAF,
dans lequel le message de réponse porte des informations d'indication pour le rejet du rapport de RUCI et/ou une raison pour le rejet du rapport de RUCI.

3. Procédé selon la revendication 2, dans lequel la raison pour le rejet du rapport est qu'une suppression du contexte ou d'une transaction en attente est en cours d'exécution.

4. Procédé de gestion d'informations d'encombrement, **caractérisé en ce qu'**il comprend :
l'envoi, par une première fonction de prise de conscience d'encombrement de réseau d'accès radio, RAN, RACF, à une fonction de règles de facturation et de politique, PCRF, d'un rapport d'informations d'encombrement de plan d'utilisateur, RUCI, de réseau d'accès radio, RAN, comprenant un identifiant d'utilisateur et un identifiant de réseau de données en paquets, PDN, (301),
la réception, par la première RCAF, d'un message de demande de modification de contexte d'UE, MUR, envoyé par une fonction de règles de facturation et de politique, PCRF, lorsqu'un UE s'est déplacé de la première RCAF à une autre RCAF, dans lequel le message de MUR comprend des informations de demande pour supprimer un contexte d'un identifiant d'utilisateur et d'un identifiant de PDN mémorisé dans la première RCAF (401) ; et
la gestion, par ladite première RCAF, du contexte de l'identifiant d'utilisateur et de l'identifiant de PDN en fonction du message de MUR (402) ; dans lequel la gestion, par ladite première RCAF, du contexte de l'identifiant d'utilisateur et de l'identifiant de PDN en fonction du message de MUR (402) comprend :
la suppression, par ladite première RCAF, du contexte de l'identifiant d'utilisateur et de l'identifiant de PDN en fonction du MUR, et
le procédé comprend en outre :
si ladite première RCAF reçoit ensuite des informations d'encombrement de l'identifiant d'utilisateur et de l'identifiant de PDN, l'envoi, par ladite première RCAF, d'un nouveau rapport de RUCI comprenant l'identifiant d'utilisateur et l'identifiant de PDN à la PCRF, dans lequel la gestion, par la RCAF, du contexte de l'identifiant d'utilisateur et de l'identifiant de PDN en fonction du message de MUR (402) comprend :
si la première RCAF n'a pas reçu un message de réponse pour le rapport de RUCI lorsque la RCAF reçoit le message de MUR, le marquage, par la RCAF, du contexte de l'identifiant d'utilisateur et de l'identifiant de PDN mémorisé dans la RCAF, en tant qu'un état en attente.

5. Procédé selon la revendication 4, dans lequel la gestion, par la première RCAF, du contexte de l'identifiant d'utilisateur et de l'identifiant de PDN en fonction du message de MUR comprend :
après que ladite première RCAF reçoit, en provenance de la PCRF, un message de réponse pour rejeter le rapport de RUCI, le marquage, par ladite première RCAF, du contexte de l'identifiant d'utilisateur et de l'identifiant de PDN mémorisé dans ladite première RCAF, en tant qu'un état en attente.

6. Procédé selon la revendication 5, dans lequel, après le marquage, par ladite première RCAF, du contexte de l'identifiant d'utilisateur et de l'identifiant de PDN mémorisé dans ladite première RCAF, en tant que l'état en attente, le procédé comprend en outre :
si ladite première RCAF reçoit ensuite les informations d'encombrement de l'identifiant d'utilisateur et de l'identifiant de PDN, l'envoi, par ladite première RCAF, d'un nouveau rapport de RUCI comprenant l'identifiant d'utilisateur et l'identifiant de PDN à la PCRF ;
et, si ladite première RCAF ne reçoit pas les informations d'encombrement de l'identifiant d'utilisateur et de l'identifiant de PDN, la suppression, par ladite première RCAF, du contexte de l'identifiant d'utilisateur et de l'identifiant de PDN mémorisé dans ladite première RCAF, et
dans lequel, après l'envoi, par ladite première RCAF, du nouveau rapport de RUCI comprenant l'identifiant d'utilisateur et l'identifiant de PDN à la PCRF, le procédé comprend en outre :
la suppression, par ladite première RCAF, d'une marque de l'état en attente après la réception d'un message de réponse pour le nouveau rapport de RUCI.

7. Appareil de fonction de règles de facturation et de politique, PCRF, permettant la gestion d'informations d'encombrement, **caractérisé en ce qu'**il comprend :
un premier module de réception (901) configuré pour effectuer la réception d'un rapport d'informations d'encombrement de plan d'utilisateur, RUCI, de réseau d'accès radio, RAN, envoyé par une première fonction de prise de conscience d'encombrement de RAN, RACF, dans lequel le rapport de RUCI comprend un identifiant d'utilisateur, et un identifiant de réseau de données en paquets, PDN ;
dans lequel un message de demande de modification de contexte d'UE, MUR, est envoyé de la PCRF à ladite première RCAF à la réception, en provenance de la PCRF, d'un rapport de RUCI envoyé depuis une autre RCAF, et la détermination, par la PCRF, qu'un UE s'est déplacé de ladite première RCAF à une autre RCAF ; et
un premier module de gestion (902) configuré pour effectuer le rejet du rapport de RUCI s'il est déterminé qu'un message de réponse pour le message de MUR n'est pas reçu, dans lequel le message de MUR comprend des informations de demande pour supprimer un contexte de l'identifiant d'utilisateur et de l'identifiant de PDN mémorisé dans la RCAF.

8. Appareil de PCRF selon la revendication 7, comprenant en outre :
un premier module d'envoi configuré pour effectuer l'envoi d'un message de réponse pour le rapport de RUCI à ladite première RCAF, dans lequel le message de réponse porte des informations d'indication pour le rejet du rapport de RUCI et/ou une raison pour le rejet du rapport de RUCI ;
dans lequel la raison pour le rejet du rapport est qu'une suppression du contexte ou d'une transaction en attente est en cours d'exécution.

9. Appareil de fonction de prise de conscience d'encombrement de réseau d'accès radio, RAN, RACF, permettant la gestion d'informations d'encombrement, **caractérisé en ce que** :
il est configuré pour effectuer l'envoi, à une fonction de règles de facturation et de politique, PCRF, d'un rapport d'informations d'encombrement de plan d'utilisateur, RUCI, de réseau d'accès radio, RAN, comprenant un identifiant d'utilisateur et un identifiant de réseau de données en paquets, PDN, (301),
il comprend un deuxième module de réception (1001) configuré pour effectuer la réception d'un message de demande de modification de contexte d'UE, MUR, envoyé par ladite PCRF, lorsqu'un UE s'est déplacé de la première RCAF à une autre RCAF, dans lequel le message de MUR comprend des informations de demande pour supprimer un contexte d'un identifiant d'utilisateur et d'un identifiant de PDN mémorisé dans la première RCAF, et
il comprend un deuxième module de gestion (1002) configuré pour effectuer la gestion du contexte de l'identifiant d'utilisateur et de l'identifiant de PDN en fonction du message de MUR,
dans lequel le deuxième module de gestion (1002) est configuré pour effectuer :
la suppression du contexte de l'identifiant d'utilisateur et de l'identifiant de PDN en fonction du MUR, et
l'appareil comprend en outre :
un deuxième module d'envoi configuré pour effectuer, si des informations d'encombrement de l'identifiant d'utilisateur et de l'identifiant de PDN sont ensuite reçues, l'envoi d'un nouveau rapport de RUCI comprenant l'identifiant d'utilisateur et l'identifiant de PDN à la PCRF,
dans lequel le deuxième module de gestion (1002) est configuré pour effectuer :
si un message de réponse pour le rapport de RUCI n'est pas reçu lorsque le message de MUR est reçu, le marquage du contexte de l'identifiant d'utilisateur et de l'identifiant de PDN mémorisé dans la RCAF, en tant qu'un état en attente.

10. Appareil selon la revendication 9, dans lequel le deuxième module de gestion (1002) est configuré pour effectuer :
après la réception d'un message de réponse pour rejeter le rapport de RUCI, le marquage du contexte de l'identifiant d'utilisateur et de l'identifiant de PDN mémorisé dans la RCAF, en tant qu'un état en attente.

11. Appareil selon la revendication 10, comprenant en outre :
un troisième module de gestion configuré pour effectuer, si les informations d'encombrement de l'identifiant d'utilisateur et de l'identifiant de PDN sont ensuite reçues, l'envoi d'un nouveau rapport de RUCI comprenant l'identifiant d'utilisateur et l'identifiant de PDN à la PCRF ; et, si les informations d'encombrement de l'identifiant d'utilisateur et de l'identifiant de PDN ne sont pas reçues, la suppression du contexte de l'identifiant d'utilisateur et de l'identifiant de PDN mémorisé dans ladite première RCAF,
dans lequel l'appareil comprend en outre :
un quatrième module de gestion configuré pour effectuer, après la réception d'un message de réponse pour un nouveau rapport de RUCI, la suppression d'une marque de l'état en attente.
